# FASCICULE DE BREVET EUROPEEN

(11) **EP 3 491 231 B1**
(45) Date de publication et mention de la délivrance du brevet: **16.06.2021**
(21) Numéro de dépôt: 17758231.9
(22) Date de dépôt: 27.07.2017
(51) Int. Cl.: F02M 35/10, F28D 21/00, F28F 21/06, F28F 9/02, F16J 15/00, F02M 31/20, F02B 29/04, F02M 35/104, F16L 41/08

(54) **RÉPARTITEUR D'ADMISSION À ÉCHANGEUR DE CHALEUR INTÉGRÉ**
ANSAUGKRÜMMER MIT INTERGRIERTER WÄRMETAUSCHER
INTAKE MANIFOLD WITH INTEGRATED HEAT EXCHANGER

(30) Priorité: 29.07.2016 FR 1670418
(43) Date de publication de la demande: 05.06.2019
(73) Titulaire: Sogefi Air & Cooling, 78280 Guyancourt (FR)
(72) Inventeur: BURCKEL, François, 25130 VILLERS-LE-LAC (FR); BECKER, Nicolas, 68320 Porte-Du-Ried (FR); ANCEL, Benoît, 68420 Eguisheim (FR); ANDRES, Michel, 68100 Mulhouse (FR)
(74) Mandataire: Cabinet Nuss
(86) Numéro de dépôt international: PCT/FR2017/052113
(87) Numéro de publication internationale: WO 2018/020172

(56) Documents cités:
- DE-A1- 19 644 337
- DE-A1-102009 039 569
- DE-A1-102014 012 179
- DE-A1-102014 202 466
- JP-A- 2012 064 724
- US-A- 6 056 045
- US-A1- 2014 216 385
- US-A1- 2014 299 295
- US-A1- 2015 152 987

## Description

La présente invention concerne le domaine des pièces d'équipements des véhicules automobiles, plus particulièrement les collecteurs et répartiteurs d'admission de ces derniers, et a pour objet un répartiteur d'admission avec un échangeur de chaleur intégré, dont l'étanchéité du circuit d'alimentation et d'évacuation de liquide de l'échangeur est améliorée et sécurisée.

De nombreuses constructions de répartiteur d'admission intégrant dans leur volume intérieur ou plénum un échangeur thermique à liquide sont déjà connues, par exemples par les documents FR 2 645 209 et FR 2 997 134.

Les passages des circuits d'alimentation et d'évacuation de liquide, entre l'échangeur et l'environnement extérieur, à travers la paroi du corps du répartiteur et leur raccordement à des conduits ou portions de conduits de circulation externe constituent des zones délicates à gérer en termes d'étanchéité et aboutissent souvent à des constructions complexes.

En effet, il est nécessaire, dans ces zones, de réaliser à la fois une étanchéité à l'air avec le corps du répartiteur et une étanchéité aux liquides avec l'élément de raccordement extérieur (conduit ou portion de conduit).

Par les documents US 9038610 et US 2014/0216385, on connaît des constructions de répartiteur avec échangeur intégré dans lesquelles seule l'étanchéité à l'air entre les tubulures (d'un seul tenant avec l'échangeur ou rapportés sur ce dernier) et le corps du répartiteur est évoquée.

Dans le document US 2014/0299295, il est prévu une variante (figure 2) dans laquelle une étanchéité à l'eau et une étanchéité à l'air sont fournies entre des embouts de prolongement rapportés par emmanchement sur les tubulures d'entrée et de sortie de l'échangeur, d'une part, et une pièce intermédiaire située dans le corps du répartiteur et soudée sur l'échangeur, d'autre part.

Toutefois, dans cette réalisation connue à double étanchéité aucune mesure n'est prévue pour éviter tout risque d'infiltration d'introduction ou de libération de liquide dans le corps du répartiteur en cas de défaillance de l'étanchéité au liquide. En effet, même si le positionnement de l'étanchéité à l'air permet à cette dernière de faire obstacle à une éventuelle fuite de liquide, elle n'est pas adaptée à cette fonction.

De plus, dans cette réalisation connue, la double étanchéité concerne une pièce du type embout rapportée sur les tubulures et non pas directement les tubulures elles-mêmes.

Par ailleurs, par le document DE-A-10 2014 202 466, on connaît un répartiteur avec un échangeur partiellement intégré. Des conduits d'alimentation/d'évacuation du liquide sont raccordés, par une solidarisation par clippage, sur les tubulures d'amenée et d'évacuation de l'échangeur (réalisées sous forme de pièces d'adaptation). Une étanchéité au liquide est réalisée entre les tubulures et le conduit et une étanchéité à l'air est réalisée entre le conduit et le boîtier de l'échangeur, au niveau d'une partie de ce dernier non intégrée au répartiteur. L'intégration très limitée de l'échangeur dans le répartiteur entraîne un encombrement important de l'ensemble, une faible protection de la partie exposée de l'échangeur et la gestion d'une interface d'étanchéité complexe entre la plaque support métallique de l'échangeur et le corps du répartiteur plastique soumis chacun à des contraintes différentes sous l'effet des variations de pression et de température. De plus, l'air circulant dans le répartiteur ne bénéficie pas du réchauffement de la totalité de l'échangeur et ce dernier ne profite pas du courant d'air forcé et canalisé circulant dans le répartiteur.

Par le document US 2014/0216385, on connaît un répartiteur avec un échangeur intégré. Des tubulures d'amenée et d'évacuation du liquide traversent la paroi du boîtier du répartiteur au niveau de passages correspondants. Une étanchéité au liquide est prévue dans ce document, à l'intérieur du boîtier du répartiteur entre les tubulures et le boîtier de l'échangeur. Une étanchéité à l'air est prévue entre les parois des passages précités du boîtier du répartiteur et les tubulures. Une éventuelle étanchéité entre les tubulures et les conduits d'alimentation et d'évacuation du liquide n'est pas évoquée dans ce document.

Par le document DE-A-10 2009 039 569, on connaît ainsi un répartiteur avec un échangeur intégré. Dans ce répartiteur, il est prévu une double étanchéité à l'air au niveau des tubulures d'amenée et d'évacuation du liquide, entre des rondelles solidaires des tubulures et la paroi d'un couvercle faisant partie du boîtier du répartiteur. Aucune étanchéité au liquide n'est prévue, ni évoquée.

**Par ailleurs, les documents** JP 2012 064724 A **et** DE 19644 337 A1 **divulguent d'autres variantes de moyens d'étanchéité pour des raccords d'échangeur de chaleur à liquide de refroidissement.**

Enfin, par le document DE 10 2014 012 179, on connaît également un répartiteur avec un échangeur intégré **conforme aux préambules des revendications 1 et 2.** Des tubulures d'amenée et d'évacuation du liquide sont montées dans des orifices de passage du boîtier du répartiteur avec mise en œuvre d'une étanchéité à l'air entre les tubulures et les orifices. Toutefois, aucune étanchéité spécifique au liquide n'est prévue dans ce document.

La présente invention a pour but de pallier les limitations de l'état de la technique indiqué ci-dessus, en proposant un répartiteur à échangeur intégré avec une étanchéité de chacun des deux types précités (liquide, air) au niveau des tubulures, tout en garantissant qu'une éventuelle défaillance de l'une des étanchéités ne puisse avoir un effet néfaste sur l'autre, en particulier un possible effet négatif d'une défaillance de l'étanchéité au liquide sur l'étanchéité à l'air.

**Ce but est atteint en accord avec les deux aspects de l'invention :**
- **par un répartiteur d'admission d'air selon le préambule de la revendication 1 et présentant en combinaison les caractéristiques de la partie caractérisante de cette revendication 1, d'une part, et**
- **par un répartiteur d'admission d'air selon le préambule de la revendication 2 et présentant en combinaison les caractéristiques de la partie caractérisante de cette revendication 2, d'autre part.**

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une représentation schématique partielle et en coupe d'un répartiteur d'admission avec échangeur intégré selon un premier mode de réalisation de l'invention, illustrant la région des passages des tubulures de l'échangeur à travers la paroi du corps du répartiteur ;
La figure 2 est une vue en élévation latérale d'un répartiteur d'admission en accord avec une variante du premier mode de réalisation de l'invention ;
La figure 3 est une vue en coupe selon A-A du répartiteur représenté figure 2 ;
La figure 4 est une vue partielle de détail et à une autre échelle de l'objet représenté figure 3 ;
La figure 5 est une vue de dessus du répartiteur d'admission de la figure 2 ;
La figure 6 est une vue en coupe selon A-A du répartiteur représenté figure 5, avant assemblage et raccordement des conduits de circulation ;
La figure 7A est une vue partielle de détail et à une autre échelle de l'objet représenté figure 6 ;
La figure 7B est une vue similaire à celle de la figure 7A, les conduits de circulation étant solidarisés et raccordés aux tubulures de l'échangeur ;
La figure 8 est une représentation schématique partielle et en coupe d'un répartiteur d'admission avec un échangeur intégré selon un second mode de réalisation de l'invention, illustrant la région du passage d'une tubulure de l'échangeur à travers la paroi du corps du répartiteur ;
La figure 9 est une vue de dessus d'un répartiteur d'admission en accord avec une variante du second mode de réalisation de l'invention ;
La figure 10 est une vue en élévation latérale et partiellement éclatée du répartiteur représenté figure 9 ;
La figure 11 est une vue partielle de détail et à une échelle différente de l'objet représenté figure 10 ;
Les figures 12A et 12B sont des vues partielles en coupe respectivement selon A-A et selon B-B du répartiteur représenté figure 9, et,
Les figures 13A et 13B sont des vues éclatées des objets représentés respectivement figures 12A et 12B.

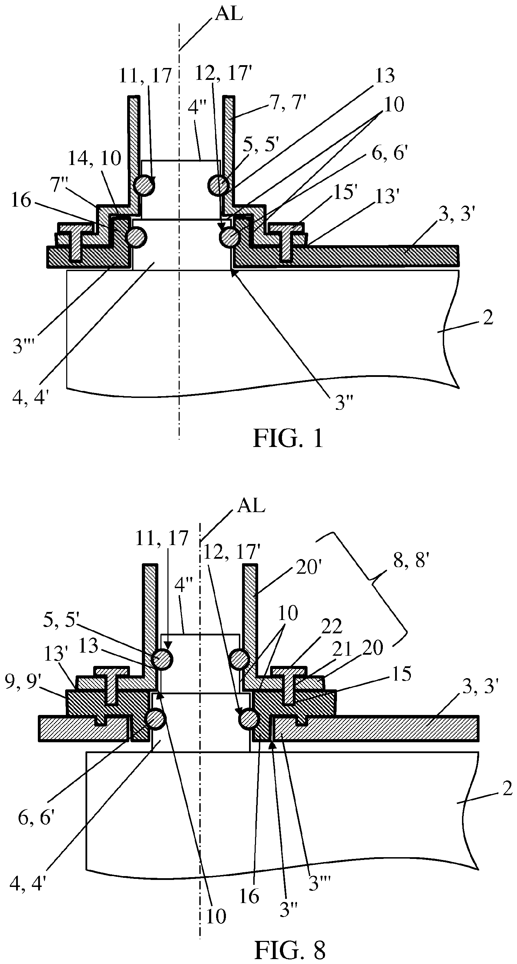

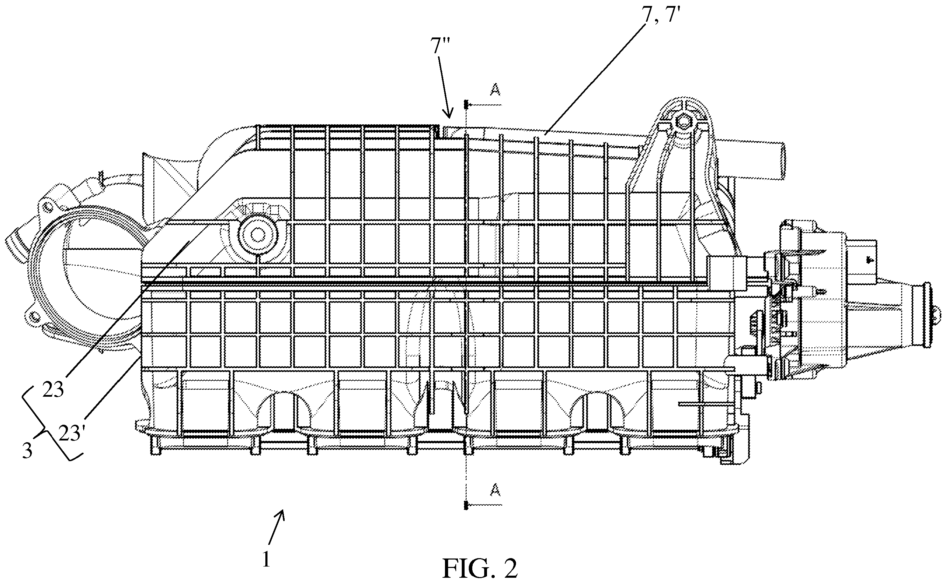

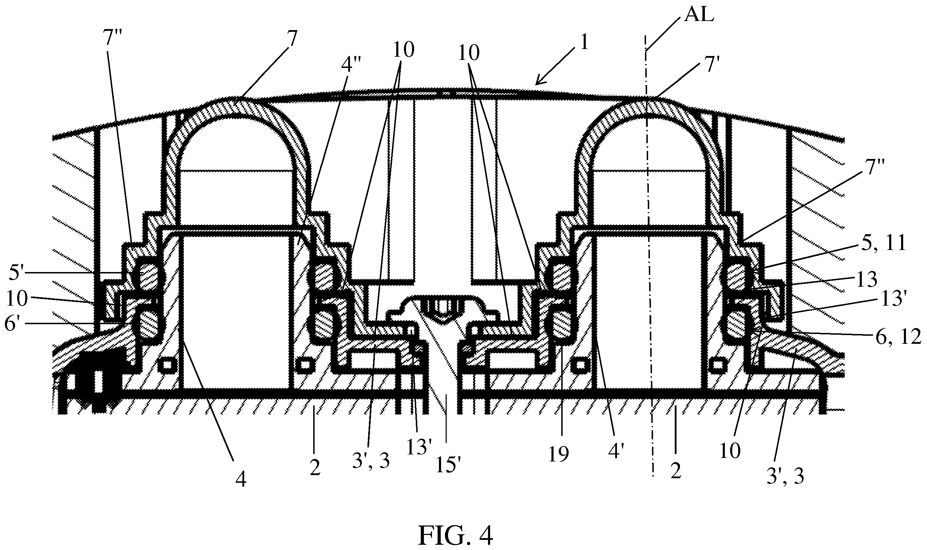

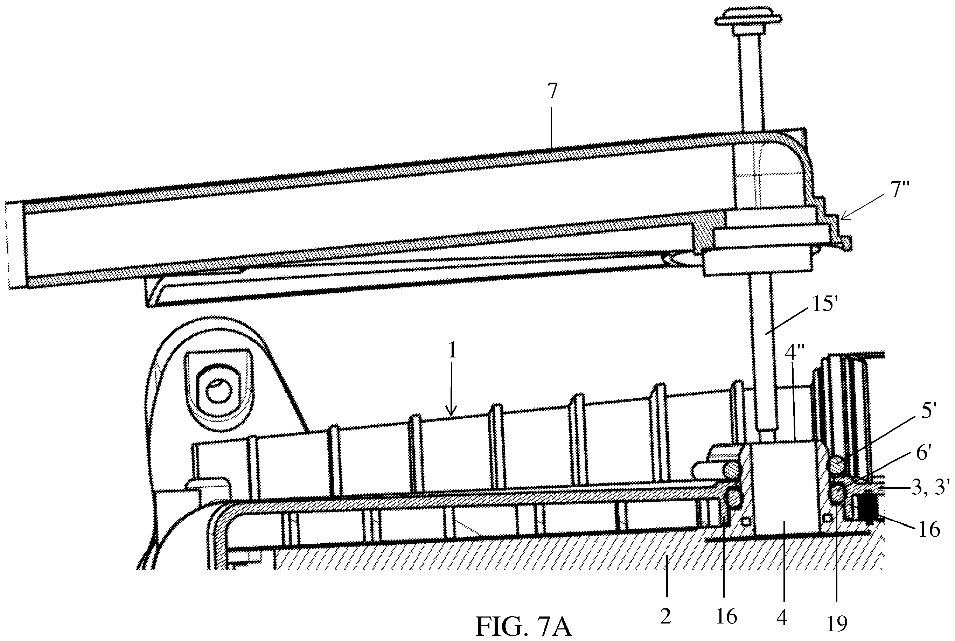

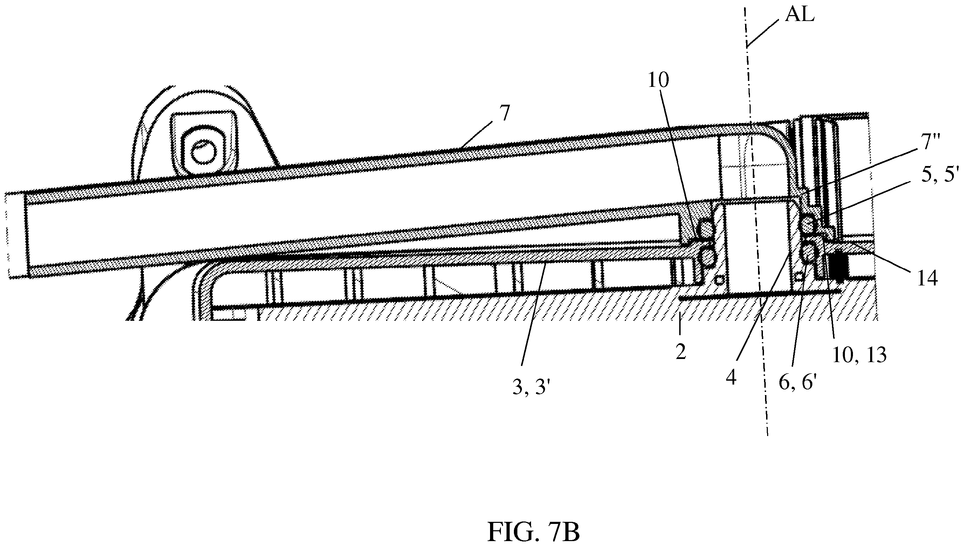

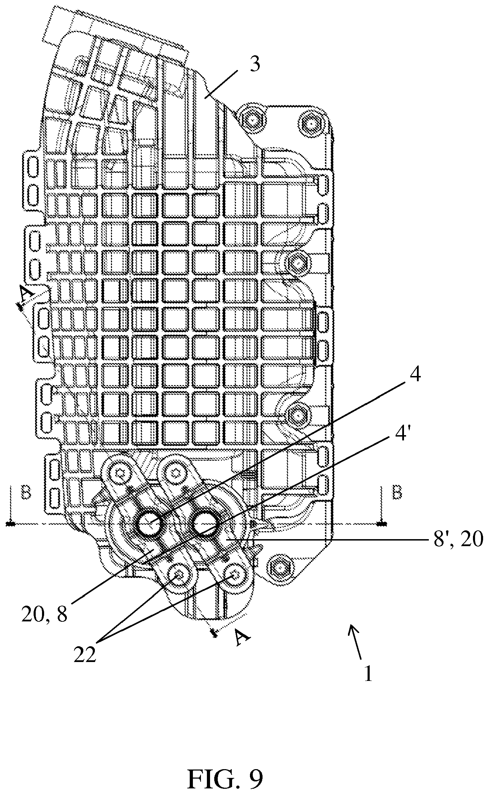

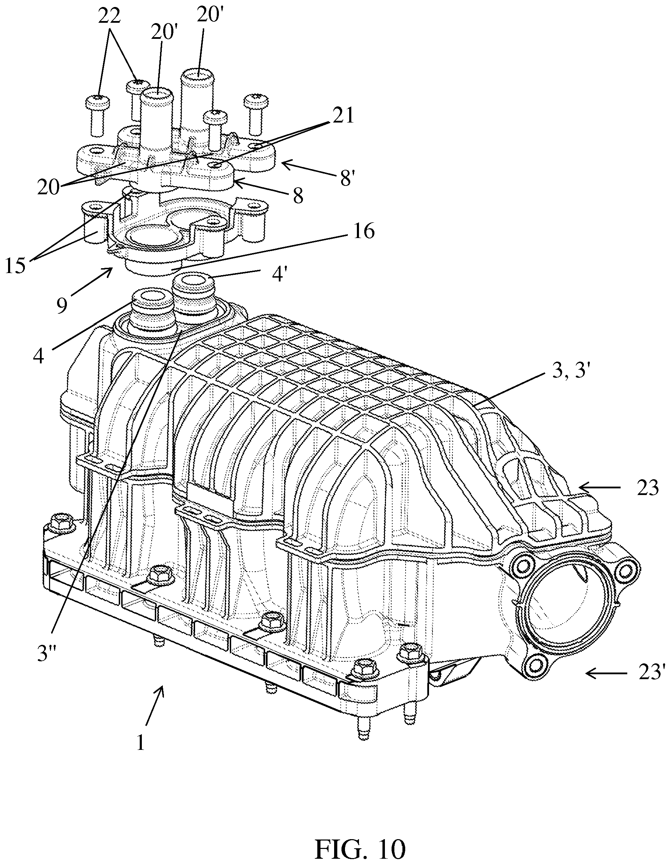

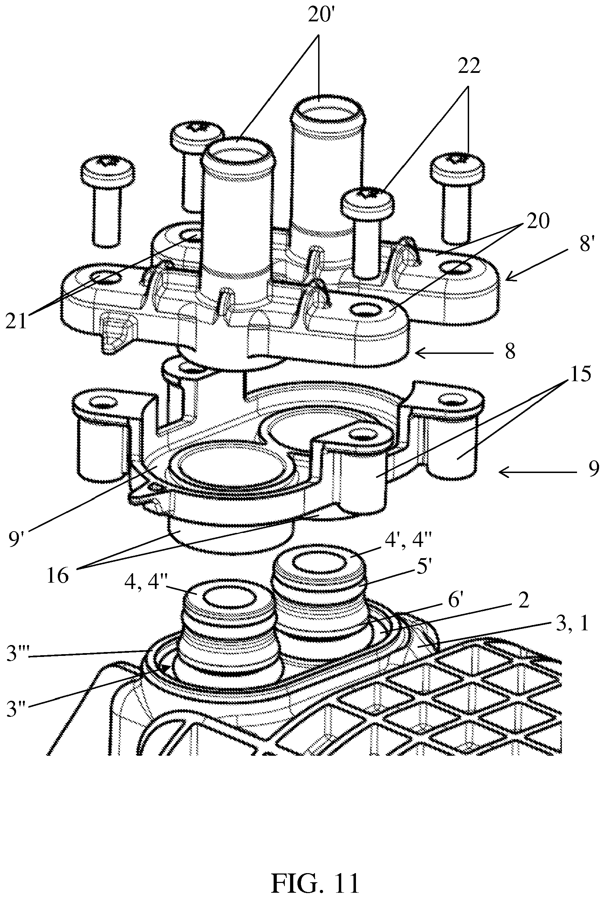

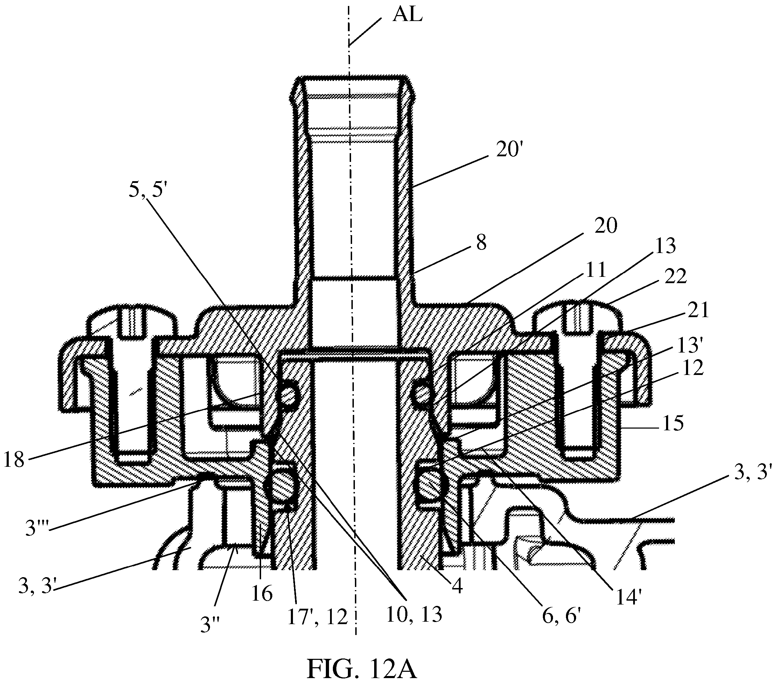

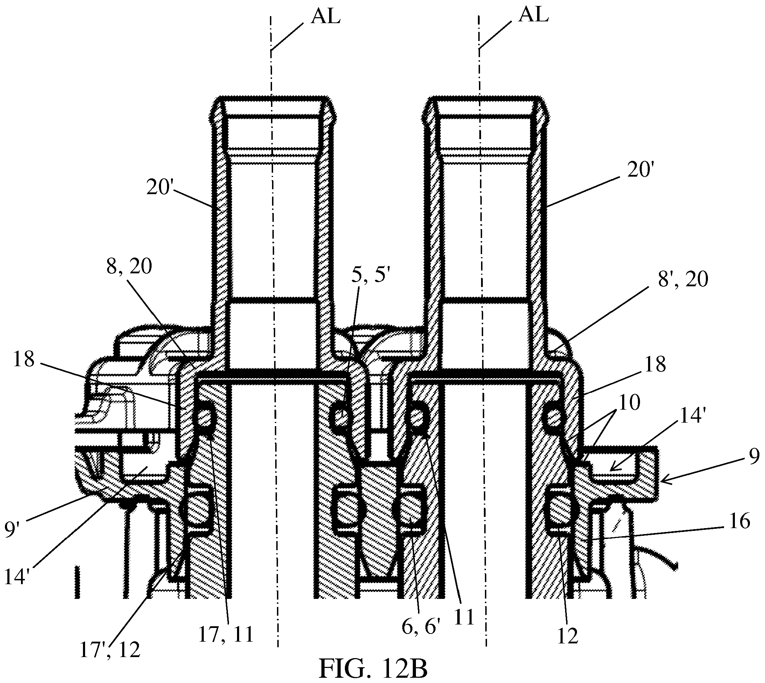

Les figures 1 à 12 montrent, au moins en partie, un répartiteur 1 d'admission d'air comprenant un échangeur de chaleur 2 entièrement (c'est-à-dire en totalité) intégré dans son corps 3. Cet échangeur de chaleur 2 est disposé entièrement dans le corps creux 3 dudit répartiteur 1 et comporte au moins deux tubulures 4 et 4' pour l'amenée et l'évacuation de liquide d'échange thermique. Ces tubulures 4, 4' s'étendent à travers la paroi 3' du corps 3 du répartiteur 1 avec réalisation, au niveau de chacune des tubulures, d'une étanchéité au liquide 5 et d'une étanchéité à l'air 6, distinctes et mutuellement décalées selon l'axe longitudinal AL de la tubulure 4, 4' respectivement considérée.

Conformément à l'invention, un moyen 5' réalisant l'étanchéité au liquide 5 est, pour chacune des tubulures 4 et 4', arrangé entre la tubulure 4, 4' et une conduite de circulation 7, 7' ou un embout de prolongement 8, 8' rapporté(e) et raccordé(e) sur l'extrémité libre 4" de cette tubulure 4, 4'. De plus, un moyen 6' réalisant l'étanchéité à l'air 6 est positionné entre la tubulure 4, 4' et le corps 3 du répartiteur 1 ou une pièce d'interface 9 assemblée de manière étanche avec ledit corps 3 du répartiteur 1. L'étanchéité au liquide 5 est située, par rapport au volume intérieur du corps 3 du répartiteur 1, au-delà de l'étanchéité à l'air 6, c'est-à-dire plus vers l'extérieur que cette dernière. En outre, un chemin de fuite 10 associé à l'étanchéité au liquide 5 et configuré pour évacuer les fuites de liquide vers l'environnement extérieur, est aménagé entre cette étanchéité au liquide 5 et l'étanchéité à l'air 6.

Grâce aux dispositions techniques précitées de l'invention, on aboutit à la réalisation d'une double étanchéité directement entre chaque tubulure 4, 4' de l'échangeur 2 et des parties contribuant à la circulation traversante depuis et vers l'extérieur du liquide de l'échangeur 2, ou à la circulation confinée de l'air dans le répartiteur 1.

De plus, l'étanchéité au liquide 5 est décalée vers l'extérieur par rapport à l'étanchéité à l'air 6 et préférentiellement réalisée à l'extérieur du corps 3 du répartiteur 1, évitant ainsi en cas de défaillance un épanchement de liquide dans le volume intérieur de ce corps 3.

Enfin, la prévision d'un chemin de fuite 10 pour le liquide en cas de défaut de l'étanchéité au liquide 5, entre les deux étanchéités 5 et 6, permet une évacuation non impactante pour l'étanchéité à l'air 6.

Avantageusement, les moyens formant le chemin de fuite 10 sont conformés, configurés et arrangés pour évacuer le liquide à distance de l'étanchéité à l'air 6.

En outre, l'homme du métier comprend bien entendu, qu'en conditions d'utilisation du répartiteur 1, ce dernier est positionné de telle manière que l'étanchéité au liquide est située au-dessus de l'étanchéité à l'air 6, comme cela ressort des figures annexées, et que le chemin de fuite 10 s'étend essentiellement vers le bas entre son extrémité proximale de l'étanchéité au liquide 5 et son ouverture 13 d'évacuation vers l'extérieur.

L'homme du métier peut en outre aisément relever que le chemin de fuite 10 peut également servir de voie d'échappement aux gaz (ici à l'air) en cas de défaillance de l'étanchéité à l'air 6 et de suppression dans le répartiteur 1, la fuite gazeuse ne sollicitant alors pas l'étanchéité au liquide 5.

En accord avec l'invention, chaque tubulure 4, 4' forme par coopération avec, d'une part, la conduite de circulation 7, 7' ou l'embout de prolongement 8, 8' associée et, d'autre part, le corps du répartiteur 3 ou la pièce d'interface 9, à chaque fois un logement 11, 12 de réception avec compression du moyen d'étanchéité 5', 6' concerné. De plus, le chemin de fuite 10 comprend, à son extrémité amont (selon le sens d'écoulement des fuites liquides), une ouverture d'évacuation 13 du logement 11 recevant le moyen 5' d'étanchéité au liquide, ladite ouverture 13 débouchant sur l'environnement extérieur par le chemin de fuite 10 et étant située au-delà de la barrière étanche fournie par le moyen d'étanchéité au liquide 5', du côté extérieur à ladite barrière.

Comme cela ressort des figures annexées et selon un mode de réalisation pratique préféré, les logements de réception 11, 12 peuvent présenter des formes annulaires, préférentiellement à section carrée ou rectangulaire, et les moyens d'étanchéité 5', 6' consister alors en des joints toriques. Dans ce cas, les ouvertures d'évacuation 13 consistent avantageusement en des passages du type fentes ou interstices, débouchant sur une surface 14 ou dans un canal 14' d'écoulement arrangé(e) à l'extérieur du corps du répartiteur 3, prolongeant le chemin de fuite 10 considéré.

Chaque surface 14 ou canal 14' d'écoulement de liquide s'étend, en position normale d'utilisation du répartiteur 1, sous la sortie extérieure de l'ouverture 13 à laquelle elle (il) est associé(e).

Les passages formant les ouvertures d'évacuation 13 des logements 11 peuvent être localisés ou s'étendre, éventuellement de manière continue, sur toute ou partie de la périphérie du logement annulaire 11 correspondant. Ils se présentent, par exemple, comme des fentes entre une tubulure 4, 4' et le manchon d'extrémité 7" ou l'embout de prolongement 8, 8' associé. Ils peuvent également présenter une forme plus complexe, tel qu'un interstice en chicane, avec coopération additionnelle du corps 3 du répartiteur ou de la pièce d'interface 9 pour sa définition.

Bien entendu, l'homme du métier comprend que les joints toriques 5' et 6' peuvent consister en des matériaux (caoutchouc, silicone, polymère, ...) distincts adaptés à chaque fois à leur fonction.

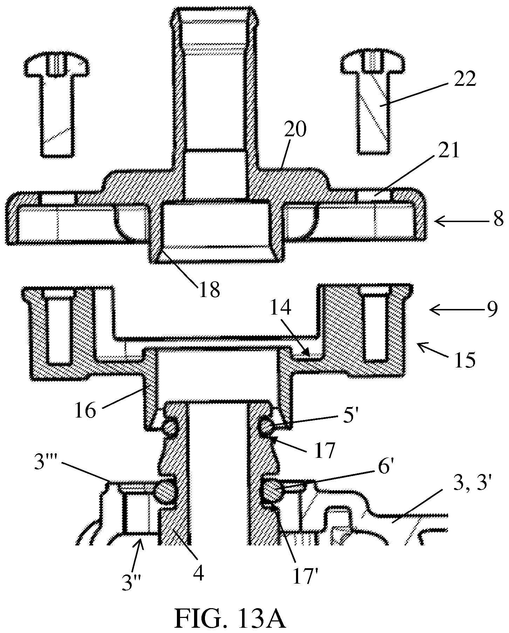

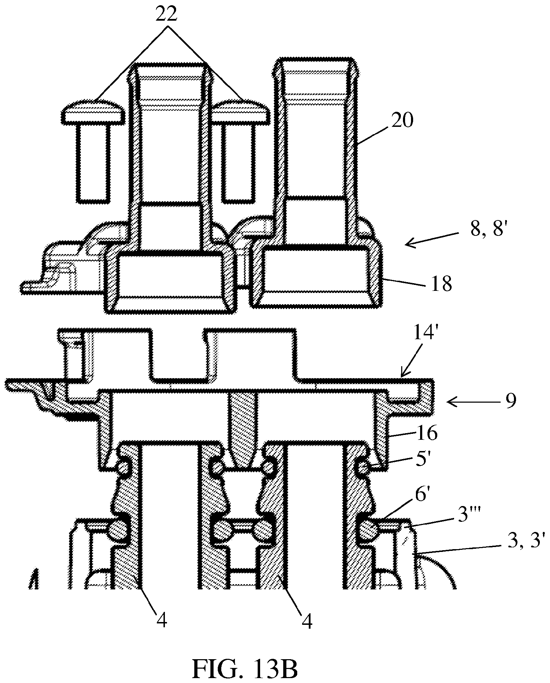

Les figures 1 à 7, d'une part, et les figures 8 à 13, d'autre part, illustrent, de manière non limitative, deux modes de réalisation différents de l'invention, à savoir, sans et avec mise en œuvre d'une pièce d'interface 9.

Dans la réalisation des figures 1 à 7, les moyens externes d'alimentation et d'évacuation du liquide d'échange thermique (ici des conduites de circulation 7, 7") sont fixées directement sur le corps 3 du répartiteur.

Dans la réalisation des figures 8 à 13, les moyens externes d'alimentation et d'évacuation du liquide d'échange thermique (ici des embouts de prolongement 8, 8') sont solidarisés au corps 3 du répartiteur par le biais d'au moins une pièce d'interface 9 rapportée sur ce corps 3. Cette pièce 9 spécifique peut alors également contribuer à la réalisation de l'étanchéité à l'air de ces tubulures 8, 8' vis-à-vis du corps 3 du répartiteur, en redéfinissant les passages traversants pour lesdites tubulures.

Dans les deux modes de réalisation précités, et comme l'illustrent les dessins annexés, le chemin de fuite 10 se présente essentiellement sous la forme d'un passage, formé spécifiquement dans une pièce ou créé indirectement entre deux pièces lors de leur assemblage, avec une ouverture d'entrée amont (ouverture d'évacuation 13 du logement 11 du moyen 5') et une ouverture de sortie aval 13' débouchant sur l'environnement extérieur, c'est-à-dire à l'extérieur du corps 3 du répartiteur 1. Ainsi, le liquide fuitant l'étanchéité 5 dispose d'une voie de libre déversement vers l'extérieur comme alternative à un passage par l'obstacle formé par l'étanchéité à l'air 6.

Le chemin de fuite 10 peut par exemple résulter d'un assemblage non continu, par exemple par points 15', 22, du conduit 7, 7' ou de l'embout 8, 8' avec le boîtier 3' ou la pièce d'interface 9, laissant subsister un espace interstitiel, éventuellement discontinu, plan ou non, entre les deux pièces assemblées (formant le chemin de fuite).

Ainsi, de manière avantageuse, l'étanchéité au liquide 5, qui est décalée vers l'extérieur par rapport à l'étanchéité à l'air 6, est située à l'extérieur du corps 3 du répartiteur 1, et au-dessus de l'étanchéité à l'air 6 en position normale d'utilisation du répartiteur 1. De plus, le chemin de fuite 10 s'étend depuis l'étanchéité au liquide 5, en s'éloignant de la tubulure 4, 4' respectivement concernée et, considéré globalement, vers le bas.

Selon une caractéristique de l'invention, ressortant des figures 8 à 13, la ou chaque pièce d'interface 9 comprend, d'une part, au moins un site 15 de montage et de fixation pour au moins un embout de prolongement 8, 8' ou conduit de circulation 7, 7' et, d'autre part, au moins une portion de paroi 16 constituant une collerette et venant extérieurement en regard de la tubulure 4, 4' respectivement concernée pour réaliser un logement de réception 12 d'un moyen d'étanchéité à l'air 6', ladite ou chaque pièce d'interface 9 étant rapportée de manière étanche sur le corps du répartiteur 3, au niveau de la ou des ouvertures de passage 3" pour les tubulures 4, 4', préférentiellement par soudure, collage ou vissage avec interposition d'un joint.

Avantageusement, une unique pièce d'interface 9 est prévue pour les deux tubulures 8, 8', arrangés de manière connue côte à côte.

Comme le montrent également les figures amenées, il est avantageusement prévu que l'étanchéité au liquide 5 est arrangée plus proche de l'extrémité libre 4" de la tubulure 4, 4' concernée que l'étanchéité à l'air 6 correspondante associée à cette tubulure 4, 4', les moyens d'étanchéité 5', 6' étant montés sous compression élastique dans des logements de réception 11, 12 annulaires respectifs.

Ces logements 11, 12 sont formés chacun par coopération complémentaire de la tubulure 4, 4' concernée, éventuellement pourvue de sites de montage 17, 17' sous forme de rainures ou de gorges périphériques, avec respectivement, d'une part, un manchon d'extrémité 7" d'une conduite de circulation 7, 7' ou une jupe 18 d'un embout de prolongement 8, 8' et, d'autre part, une collerette 16 faisant partie du corps du répartiteur 3 ou d'une pièce d'interface 9 rapportée sur ce dernier, au niveau de l'ouverture de passage 3" de la tubulure 4, 4' considérée à travers la paroi 3' du corps du répartiteur 3.

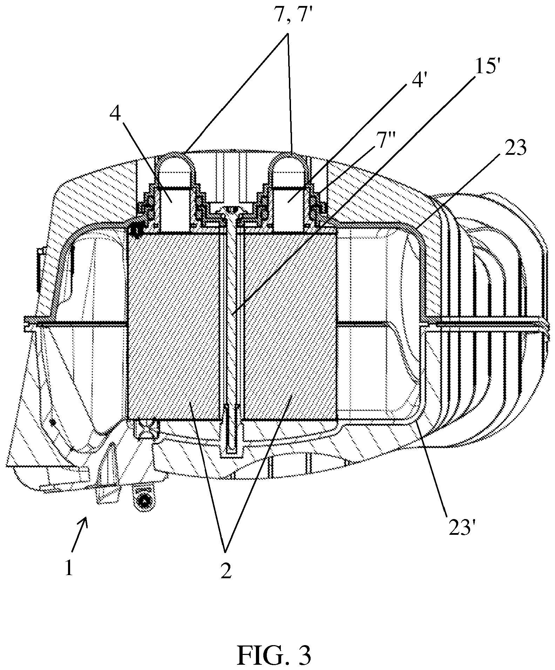

Les logements 11 et 12, ainsi que les moyens d'étanchéité 5', 6', sont bien entendu tous arrangés concentriquement autour et le long de l'axe longitudinal AL des tubulures 4, 4' concernées. Ils peuvent présenter des diamètres différents (figures 1 et 8) ou identiques (figures 3, 4, 7, 12 et 13).

En accord avec un premier mode de réalisation de l'invention, ressortant des figures 1 à 7, il peut être avantageusement prévu que, dans le cas d'un raccordement direct entre une conduite de circulation 7, 7' et une tubulure 4, 4', l'ouverture de passage 3" de la tubulure 4, 4' au niveau du corps du répartiteur 3 sont pourvue d'une collerette 16 à section en L définissant en coopération tête bêche avec un épaulement 19 de la tubulure 4, 4' le logement de réception annulaire 12 du joint d'étanchéité à l'air 6' et le manchon d'extrémité 7" de la conduite de circulation 7, 7' s'étend par-dessus le bord de l'extrémité libre 4" de la tubulure 4, 4' et au moins partiellement par-dessus la collerette 16 de l'ouverture de passage 3" du corps du répartiteur 3, en délimitant avec ladite tubulure 7, 7' et ladite collerette 16 le logement de réception 11 du joint d'étanchéité au liquide 5'.

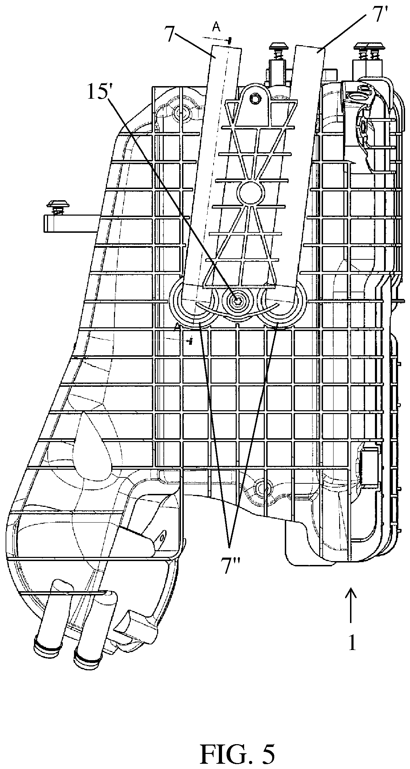

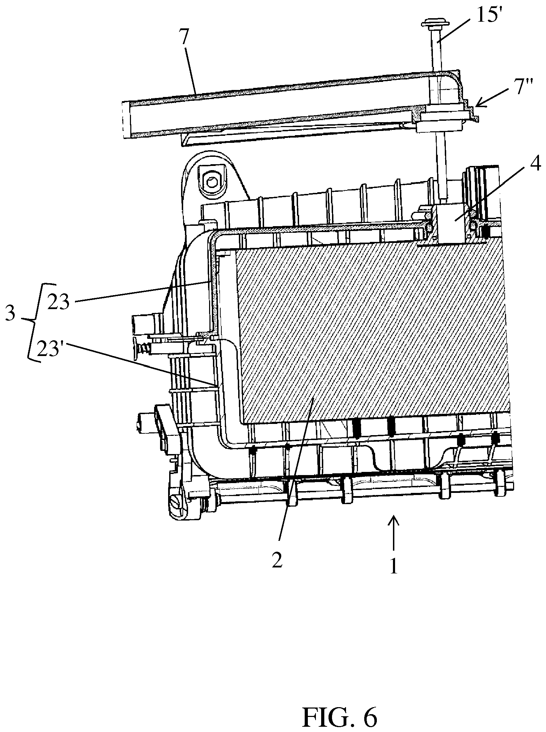

Comme le montrent les figures 5 et 6 , les deux conduits de circulation 7 et 7' avec leurs manchons d'extrémité 7" respectifs forment une pièce unique d'un seul tenant, l'assemblage de cette pièce 7, 7', 7" avec le corps 3 du répartiteur 1 étant verrouillé, par exemple par un moyen de fixation 15' par vissage venant en prise dans ledit corps 3 (figure 1).

En accord avec un second mode de réalisation de l'invention, ressortant des figures 8 à 13, il est prévu qu'en cas de présence d'embouts de prolongement 8 et 8', l'ouverture de passage commune 3" des deux tubulures 4 et 4' à travers la paroi 3' du corps du répartiteur 3 soit pourvue d'une pièce 9 d'interface mécanique et fluidique comprenant un corps principal 9' en forme de plaque, solidarisé de manière étanche avec le corps du répartiteur 3, préférentiellement en continu le long du bord 3'" de l'ouverture de passage commune 3"'. Sur ce corps principal 9' sont formés, d'un seul tenant, d'une part, des sites 15 de montage et de fixation pour les deux embouts de prolongements 8 et 8' et, d'autre part, des collerettes intérieures cylindriques 16 emmanchés sur les tubulures 4, 4' et s'étendant au moins partiellement dans l'ouverture de passage commune 3", ces collerettes 16 délimitant avec les faces externes des tubulures 4, 4' des logements de réception pour les moyens d'étanchéité à l'air 6'.

**De plus,** chaque embout de prolongement 8, 8' comprend un corps principal en forme de plaque 20 comportant, d'un seul tenant, d'une part, une jupe cylindrique 18 apte et destinée à venir s'emboiter sur l'extrémité libre d'une tubulure 4, 4', en délimitant avec la face externe de cette dernière un logement de réception 11 pour un moyen d'étanchéité au liquide 5', et, d'autre part, une portion de conduit de raccordement 20' qui s'étend à l'opposé de la collerette 16 et dont le passage intérieur présente une section identique à celle de la tubulure 4, 4' correspondant et est aligné axialement avec le passage intérieur de cette dernière, ledit corps principal 20 étant en outre pourvu de sites 21 de réception de moyens 22 de fixation par vissage, coïncidents avec ceux de la pièce d'interface 9.

Conformément à une réalisation alternative, les tubulures 4, 4' peuvent également s'étendre jusque dans la portion de conduit 20' des embouts de prolongement 8, 8', l'étanchéité au liquide 5 est alors réalisée entre les tubulures 4, 4' et les portions 20' (absence de jupe 18).

Selon une caractéristique de l'invention et quel que soit le mode de réalisation pratique du chemin de fuite 10, il est avantageusement prévu, dans le premier mode, une solidarisation non étanche entre le manchon d'extrémité 7" et le corps 3 et, dans le second mode, une solidarisation non étanche entre les embouts 8, 8' et la pièce d'interface 9.

Selon une autre caractéristique de l'invention, le corps du répartiteur 3, les conduits de circulation, 7, 7', la pièce d'interface 9 et les embouts de prolongement 8, 8' sont réalisés en matériaux thermoplastiques, éventuellement chargé et/ou renforcé, le corps du répartiteur 3 étant avantageusement constitué par l'assemblage d'au moins deux parties constitutives 23 et 23', réalisées chacune d'un seul tenant par moulage par exemple.

L'invention concerne également un véhicule automobile à moteur à combustion interne, comprenant un circuit d'admission d'air et au moins un circuit de refroidissement, véhicule caractérisé en ce que le circuit d'admission d'air comprend un répartiteur 1 tel que décrit précédemment, l'échangeur intégré 2 faisant partie du circuit de refroidissement.

## Revendications

1. Répartiteur (1) d'admission d'air comprenant un échangeur de chaleur (2) entièrement intégré dans son corps (3), ledit échangeur de chaleur (2) étant disposé entièrement dans le corps creux (3) dudit répartiteur (1) et comportant au moins deux tubulures (4 et 4') pour l'amenée et l'évacuation de liquide d'échange thermique, lesdites tubulures (4, 4') s'étendant à travers la paroi (3') du corps (3) du répartiteur (1) avec réalisation, au niveau de chacune des tubulures, d'une étanchéité au liquide (5) et d'une étanchéité à l'air (6), distinctes et mutuellement décalées selon l'axe longitudinal (AL) de la tubulure (4, 4') respectivement considérée,
répartiteur (1) dans lequel un moyen (5') réalisant l'étanchéité au liquide (5) est, pour chacune des tubulures (4 et 4'), arrangé entre la tubulure (4, 4') et une conduite de circulation (7, 7') rapportée et raccordée directement sur l'extrémité libre (4") de cette tubulure (4, 4'), dans lequel un moyen (6') réalisant l'étanchéité à l'air (6) est positionné entre la tubulure (4, 4') et le corps (3) du répartiteur (1), l'étanchéité au liquide (5) étant située, par rapport au volume intérieur du corps (3) du répartiteur (1), au-delà de l'étanchéité à l'air (6), c'est-à-dire plus vers l'extérieur que cette dernière, et dans lequel un chemin de fuite (10) associé à l'étanchéité au liquide (5) et configuré pour évacuer les fuites de liquide vers l'environnement extérieur, est aménagé entre cette étanchéité au liquide (5) et l'étanchéité à l'air (6),
répartiteur (1) dans lequel chaque tubulure (4, 4') forme par coopération avec, d'une part, la conduite de circulation (7, 7') associée et, d'autre part, le corps (3) du répartiteur, à chaque fois un logement (11, 12) de réception avec compression du moyen d'étanchéité (5', 6') concerné, le chemin de fuite (10) comprenant, à son extrémité amont, une ouverture d'évacuation (13) du logement (11) recevant le moyen (5') d'étanchéité au liquide, ladite ouverture (13) débouchant sur l'environnement extérieur par le chemin de fuite (10) et étant située au-delà de la barrière étanche fournie par le moyen d'étanchéité au liquide (5'), du côté extérieur à ladite barrière,
répartiteur (1) **caractérisé en ce qu'**une ouverture de passage (3") des au moins deux tubulures (4, 4') au niveau du corps (3) du répartiteur est pourvue d'une collerette (16) à section en L, définissant en coopération tête bêche avec un épaulement (19) de la tubulure (4, 4'),
**en ce que** le logement de réception annulaire (12) du joint d'étanchéité à l'air (6') et le manchon d'extrémité (7") de la conduite de circulation (7, 7') s'étend par-dessus le bord de l'extrémité libre (4") de la tubulure (4, 4') et au moins partiellement par-dessus la collerette (16) de l'ouverture de passage (3") du corps (3) du répartiteur, en délimitant avec ladite tubulure (7, 7') et ladite collerette (16) le logement de réception (11) du joint d'étanchéité au liquide (5'), et
**en ce que** les deux conduits de circulation (7 et 7') avec leurs manchons d'extrémité (7") respectifs forment une pièce unique d'un seul tenant, l'assemblage de cette pièce (7, 7', 7") avec le corps (3) du répartiteur (1) étant verrouillé, par exemple par un moyen de fixation (15') par vissage venant en prise dans ledit corps (3).

2. Répartiteur (1) d'admission d'air comprenant un échangeur de chaleur (2) entièrement intégré dans son corps (3), ledit échangeur de chaleur (2) étant disposé entièrement dans le corps creux (3) dudit répartiteur (1) et comportant au moins deux tubulures (4 et 4') pour l'amenée et l'évacuation de liquide d'échange thermique, lesdites tubulures (4, 4') s'étendant à travers la paroi (3') du corps (3) du répartiteur (1) avec réalisation, au niveau de chacune des tubulures, d'une étanchéité au liquide (5) et d'une étanchéité à l'air (6), distinctes et mutuellement décalées selon l'axe longitudinal (AL) de la tubulure (4, 4') respectivement considérée,
répartiteur (1) dans lequel un moyen (5') réalisant l'étanchéité au liquide (5) est, pour chacune des tubulures (4 et 4'), arrangé entre la tubulure (4, 4') et un embout de prolongement (8, 8') rapporté et raccordé sur l'extrémité libre (4") de cette tubulure (4, 4'), dans lequel un moyen (6') réalisant l'étanchéité à l'air (6) est positionné entre la tubulure (4, 4') et une pièce d'interface (9) assemblée de manière étanche avec le corps (3) du répartiteur (1), l'étanchéité au liquide (5) étant située, par rapport au volume intérieur du corps (3) du répartiteur (1), au-delà de l'étanchéité à l'air (6), c'est-à-dire plus vers l'extérieur que cette dernière, dans lequel un chemin de fuite (10) associé à l'étanchéité au liquide (5) et configuré pour évacuer les fuites de liquide vers l'environnement extérieur, est aménagé entre cette étanchéité au liquide (5) et l'étanchéité à l'air (6),
répartiteur (1) dans lequel chaque tubulure (4, 4') forme par coopération avec, d'une part, l'embout de prolongement (8, 8') associé et, d'autre part, la pièce d'interface (9), à chaque fois un logement (11, 12) de réception avec compression du moyen d'étanchéité (5', 6') concerné, le chemin de fuite (10) comprenant, à son extrémité amont, une ouverture d'évacuation (13) du logement (11) recevant le moyen (5') d'étanchéité au liquide, ladite ouverture (13) débouchant sur l'environnement extérieur par le chemin de fuite (10) et étant située au-delà de la barrière étanche fournie par le moyen d'étanchéité au liquide (5'), du côté extérieur à ladite barrière,
répartiteur (1) **caractérisé en ce qu'**une ouverture de passage commune (3") des au moins deux tubulures (4 et 4') à travers la paroi (3') du corps (3) du répartiteur est pourvue d'une pièce (9) d'interface mécanique et fluidique comprenant un corps principal (9') en forme de plaque, solidarisé de manière étanche avec le corps (3) du répartiteur, préférentiellement en continu le long du bord (3"') de l'ouverture de passage commune (3"'),
**en ce que** sur le corps principal (9') de la pièce (9) sont formés, d'un seul tenant, d'une part, des sites (15) de montage et de fixation pour les deux embouts de prolongements (8 et 8') et, d'autre part, des collerettes intérieures cylindriques (16), emmanchées sur les tubulures (4, 4') et s'étendant au moins partiellement dans l'ouverture de passage commune (3"), ces collerettes (16) délimitant avec les faces externes des tubulures (4, 4') des logements de réception pour les moyens d'étanchéité à l'air (6'), et
**en ce que** chaque embout de prolongement (8, 8') comprend un corps principal en forme de plaque (20) comportant, d'un seul tenant, d'une part, une jupe cylindrique (18) apte et destinée à venir s'emboiter sur l'extrémité libre d'une tubulure (4, 4'), en délimitant avec la face externe de cette dernière un logement de réception (11) pour un moyen d'étanchéité au liquide (5'), et, d'autre part, une portion de conduit de raccordement (20') qui s'étend à l'opposé de la collerette (16) et dont le passage intérieur présente une section identique à celle de la tubulure (4, 4') correspondant et est aligné axialement avec le passage intérieur de cette dernière, ledit corps principal (20) étant en outre pourvu de sites (21) de réception de moyens (22) de fixation par vissage, coïncidents avec ceux de la pièce d'interface (9).

3. Répartiteur selon la revendication 1 ou 2, **caractérisé en ce que** l'étanchéité au liquide (5), qui est décalée vers l'extérieur par rapport à l'étanchéité à l'air (6), est située à l'extérieur du corps (3) du répartiteur (1) et au-dessus de l'étanchéité à l'air (6), en position normale d'utilisation du répartiteur (1), et **en ce que** le chemin de fuite (10) s'étend, depuis l'étanchéité au liquide (5), en s'éloignant de la tubulure (4, 4') respectivement concernée et, considéré globalement, vers le bas.

4. Répartiteur d'admission selon la revendication 1 ou 2, **caractérisé en ce que** les logements de réception (11, 12) présentent des formes annulaires, préférentiellement à section carrée ou rectangulaire, et **en ce que** les moyens d'étanchéité (5', 6') consistant en des joints toriques, les ouvertures d'évacuation (13) consistent avantageusement en des passages du type fentes ou interstices, débouchant sur une surface (14) ou dans un canal (14') d'écoulement arrangé(e) à l'extérieur du corps (3) du répartiteur.

5. Répartiteur d'admission selon la revendication 2 ou l'une quelconque des revendications 3 et 4 pour autant qu'elles se rattachent à la revendication 2, **caractérisé en ce que** la ou chaque pièce d'interface (9) comprend, d'une part, au moins un site (15) de montage et de fixation pour au moins un embout de prolongement (8, 8') ou conduit de circulation (7, 7') et, d'autre part, au moins une portion de paroi (16) constituant une collerette et venant extérieurement en regard de la tubulure (4, 4') respectivement concernée pour réaliser un logement de réception (12) d'un moyen d'étanchéité à l'air (6'), ladite ou chaque pièce d'interface (9) étant rapportée de manière étanche sur le corps (3) du répartiteur, au niveau d'au moins une ouverture de passage (3") pour les tubulures (4, 4'), préférentiellement par soudure, collage ou vissage avec interposition d'un joint.

6. Répartiteur d'admission selon l'une quelconque des revendications 1 à 5, **caractérisé en ce que** l'étanchéité au liquide (5) est arrangée plus proche de l'extrémité libre (4") d'une tubulure (4, 4') que l'étanchéité à l'air (6) correspondante associée à cette tubulure (4, 4'), les moyens d'étanchéité (5', 6') étant montés sous compression élastique dans des logements de réception (11, 12) annulaires respectifs, formés chacun par coopération complémentaire d'une tubulure (4, 4'), éventuellement pourvue de sites de montage (17, 17') sous forme de rainures ou de gorges périphériques, avec respectivement, d'une part, un manchon d'extrémité (7") d'une conduite de circulation (7, 7') ou une jupe (18) d'un embout de prolongement (8, 8') et, d'autre part, une collerette (16) faisant partie du corps (3) du répartiteur ou d'une pièce d'interface (9) rapportée sur ce corps (3), au niveau de l'ouverture de passage (3") de la tubulure (4, 4') considérée à travers la paroi (3') du corps (3) du répartiteur.

7. Répartiteur d'admission, selon l'une quelconque des revendications 1 à 6, **caractérisé en ce que** le corps (3) du répartiteur, les conduits de circulation (7, 7'), la pièce d'interface (9) et les embouts de prolongement (8, 8') sont réalisés en matériaux thermoplastiques, éventuellement chargé et/ou renforcé, le corps (3) du répartiteur étant avantageusement constitué par l'assemblage d'au moins deux parties constitutives (23, 23').

8. Véhicule automobile à moteur à combustion interne, comprenant un circuit d'admission d'air et au moins un circuit de refroidissement, véhicule **caractérisé en ce que** le circuit d'admission d'air comprend un répartiteur (1) selon l'une quelconque des revendications 1 à 7, l'échangeur intégré (2) faisant partie du circuit de refroidissement.

## Patentansprüche

1. Luftansaugverteiler (1), umfassend einen vollständig in seinen Körper (3) integrierten Wärmetauscher (2), wobei der Wärmetauscher (2) vollständig im hohlen Körper (3) des Verteilers (1) angeordnet ist und zumindest zwei Stutzen (4 und 4') zum Einlass und Auslass von Wärmetauschflüssigkeit aufweist, wobei sich die Stutzen (4, 4') durch die Wand (3') des Körpers (3) des Verteilers (1) erstecken, wobei an jedem der Stutzen eine Flüssigkeitsabdichtung (5) und eine Luftabdichtung (6) vorgesehen sind, die entlang der Längsachse (AL) des betreffenden Stutzens (4, 4') voneinander getrennt und zueinander versetzt sind,
wobei bei dem Verteiler (1) für jeden der Stutzen (4 und 4') zwischen dem Stutzen (4, 4') und einer am freien Ende (4'') des Stutzens (4, 4') angebrachten und direkt mit diesem verbundenen Zirkulationsleitung (7, 7') ein Mittel (5') zur Flüssigkeitsabdichtung (5) angeordnet ist, wobei zwischen dem Stutzen (4, 4') und dem Körper (3) des Verteilers (1) ein Mittel (6') zur Luftabdichtung (6) positioniert ist, wobei sich die Flüssigkeitsabdichtung (5) in Bezug auf das Innenvolumen des Körpers (3) des Verteilers (1), jenseits der Luftabdichtung (6), d. h. weiter außen als diese, befindet, und wobei zwischen der Flüssigkeitsabdichtung (5) und der Luftabdichtung (6) ein Leckageweg (10) angeordnet ist, der der Flüssigkeitsabdichtung (5) zugeordnet und zur Ableitung von Leckageflüssigkeit nach außen konfiguriert ist, wobei bei dem Verteiler (1) jeder Stutzen (4, 4') durch Zusammenwirken mit der zugeordneten Zirkulationsleitung (7, 7') einerseits und dem Verteilerkörper (3) andererseits jeweils ein Raum (11, 12) zur Aufnahme des betreffenden Abdichtungsmittels (5', 6') mit Kompression ausbildet, wobei der Leckageweg (10) an einem stromaufwärtigen Ende eine Auslassöffnung (13) des Raums (11) zur Aufnahme des Flüssigkeitsabdichtungsmittels (5') umfasst, wobei die Öffnung (13) über den Leckageweg (10) nach außen mündet und sich jenseits der vom Flüssigkeitsabdichtungsmittel (5') bereitgestellten Flüssigkeitssperre auf der Seite außerhalb der Sperre befindet,
wobei der Verteiler (1) **dadurch gekennzeichnet ist, dass** eine Durchgangsöffnung (3'') der zumindest zwei Stutzen (4, 4') am Körper (3) des Verteilers mit einem Kragen (16) mit L-förmigem Querschnitt versehen ist, der in entgegengesetzter Zusammenwirkung mit einer Schulter (19) des Stutzens (4, 4') definiert,
dass der ringförmige Aufnahmeraum (12) der Luftabdichtung (6') und die Endmuffe (7'') der Zirkulationsleitung (7, 7') sich über den Rand des freien Endes (4'') des Stutzens (4, 4') hinaus und zumindest teilweise über den Kragen (16) der Durchgangsöffnung (3") des Körpers (3) des Verteilers hinaus erstrecken und mit dem Stutzen (7, 7') und dem Kragen (16) den Aufnahmeraum (11) des Flüssigkeitsabdichtungsmittels (5') begrenzen, und
dass die beiden Zirkulationsleitungen (7 und 7') mit ihren jeweiligen Endmuffen (7") ein einziges einstückiges Teil ausbilden, wobei die Montage des Teils (7, 7', 7") mit dem Körper (3) des Verteilers (1) gesichert ist, beispielsweise durch ein Verschraubungsmittel (15'), das in den Körper (3) eingreift.

2. Luftansaugverteiler (1), umfassend einen vollständig in seinen Körper (3) integrierten Wärmetauscher (2), wobei der Wärmetauscher (2) vollständig im hohlen Körper (3) des Verteilers (1) angeordnet ist und zumindest zwei Stutzen (4 und 4') zum Einlass und Auslass von Wärmetauschflüssigkeit aufweist, wobei sich die Stutzen (4, 4') durch die Wand (3') des Körpers (3) des Verteilers (1) erstecken, wobei an jedem der Stutzen eine Flüssigkeitsabdichtung (5) und eine Luftabdichtung (6) vorgesehen sind, die entlang der Längsachse (AL) des betreffenden Stutzens (4, 4') voneinander getrennt und zueinander versetzt sind,
wobei bei dem Verteiler (1) für jeden der Stutzen (4 und 4') zwischen dem Stutzen (4, 4') und einem am freien Ende (4") dieses Stutzens (4, 4') angebrachten und mit diesem verbundenen Verlängerungsendstück (8, 8') ein Mittel (5') zur Flüssigkeitsabdichtung (5) angeordnet ist, wobei zwischen dem Stutzen (4, 4') und einem mit dem Körper (3) des Verteilers (1) dicht verbundenen Schnittstellenteil (9) ein Mittel (6') zur Luftabdichtung (6) positioniert ist, wobei sich die Flüssigkeitsabdichtung (5) in Bezug auf das Innenvolumen des Körpers (3) des Verteilers (1) jenseits der Luftabdichtung (6), d. h. weiter außen als diese, befindet, wobei zwischen der Flüssigkeitsabdichtung (5) und der Luftabdichtung (6) ein Leckageweg (10) angeordnet ist, der der Flüssigkeitsabdichtung (5) zugeordnet und zur Ableitung von Leckageflüssigkeit nach außen konfiguriert ist, wobei bei dem Verteiler (1) jeder Stutzen (4, 4') durch Zusammenwirken mit dem zugeordneten Verlängerungsendstück (8, 8') einerseits und dem Schnittstellenteil (9) andererseits jeweils einen Raum (11, 12) zur Aufnahme des betreffenden Abdichtungsmittels (5', 6') mit Kompression ausbildet, wobei der Leckageweg (10) an seinem stromaufwärtigen Ende eine Auslassöffnung (13) des Raums (11) umfasst, die das Flüssigkeitsabdichtungsmittel (5') aufnimmt, wobei die Öffnung (13) über den Leckageweg (10) nach außen mündet und sich jenseits der vom Flüssigkeitsabdichtungsmittel (5') bereitgestellten Flüssigkeitssperre auf der Seite außerhalb der Sperre befindet,
wobei der Verteiler (1) **dadurch gekennzeichnet ist, dass** eine gemeinsame Durchgangsöffnung (3'') der zumindest zwei Stutzen (4 und 4') durch die Wand (3') des Körpers (3) des Verteilers mit einem mechanischen und strömungstechnischen Schnittstellenteil (9) versehen ist, das einen plattenförmigen Hauptkörper (9') umfasst, der mit dem Verteilerkörper (3) dicht verbunden ist, vorzugsweise durchgehend entlang des Rands (3"') der gemeinsamen Durchgangsöffnung (3"'), dass am Hauptkörper (9') des Teils (9) in einem Stück einerseits Montage- und Befestigungsstellen (15) für die beiden Verlängerungsendstücke (8 und 8') und andererseits zylindrische Innenkragen (16), die auf die Stutzen (4, 4') aufgeschoben sind und sich zumindest teilweise in die gemeinsame Durchgangsöffnung (3'') erstrecken, ausgebildet sind, wobei die Kragen (16) mit den Außenflächen der Stutzen (4, 4') Aufnahmen für die Luftabdichtungsmittel (6') begrenzen, und
dass jedes Verlängerungsendstück (8, 8') einen plattenförmigen Hauptkörper (20) umfasst, der in einem Stück einerseits eine zylindrische Schürze (18) aufweist, die dazu geeignet und bestimmt ist, sich auf das freie Ende eines Stutzens (4, 4') aufzusetzen und mit dessen Außenfläche einen Aufnahmeraum (11) für ein Flüssigkeitsabdichtungsmittel (5') zu begrenzen, und andererseits einen Verbindungsleitungsabschnitt (20') aufweist, der sich entgegengesetzt zum Kragen (16) erstreckt und dessen Innendurchgang einen mit dem Querschnitt des entsprechenden Stutzens (4, 4') identischen Querschnitt aufweist und axial mit dem Innendurchgang desselben ausgerichtet ist, wobei der Hauptkörper (20) ferner mit Stellen (21) zur Aufnahme von Verschraubungsmitteln (22) versehen ist, die mit denen des Schnittstellenteils (9) übereinstimmen.

3. Verteiler nach Anspruch 1 oder 2, **dadurch gekennzeichnet, dass** sich die Flüssigkeitsabdichtung (5), die in Bezug auf die Luftabdichtung (6) nach außen versetzt ist, in der normalen Gebrauchsposition des Verteilers (1) außerhalb des Körpers (3) des Verteilers (1) und oberhalb der Luftabdichtung (6) befindet und dass sich der Leckageweg (10) von der Flüssigkeitsabdichtung (5), weg vom jeweils betreffenden Stutzen (4, 4') und, insgesamt betrachtet, nach unten erstreckt.

4. Ansaugverteiler nach Anspruch 1 oder 2, **dadurch gekennzeichnet, dass** die Aufnahmeräume (11, 12) Ringformen, vorzugsweise mit quadratischem oder rechteckigem Querschnitt, aufweisen, und dass die Dichtungsmittel (5', 6') aus O-Ringen bestehen, wobei die Auslassöffnungen (13) vorteilhafter Weise aus schlitzförmigen Durchlässen oder Zwischenräumen bestehen, die auf eine Fläche (14) oder in einen Strömungskanal (14'), die bzw. der außerhalb des Körpers (3) des Verteilers angeordnet ist, münden.

5. Ansaugverteiler nach Anspruch 2 oder einem der Ansprüche 3 und 4, soweit sie sich auf Anspruch 2 beziehen, **dadurch gekennzeichnet, dass** das bzw. jedes Schnittstellenteil (9) einerseits zumindest eine Montage- und Befestigungsstelle (15) für zumindest ein Verlängerungsendstück (8, 8') bzw. eine Zirkulationsleitung (7, 7') umfasst und andererseits zumindest einen Wandabschnitt (16) umfasst, der einen Kragen bildet und von außen dem jeweils betreffenden Stutzen (4, 4') zugewandt ist, um einen Aufnahmeraum (12) eines Luftabdichtungsmittels (6') auszubilden, wobei das bzw. jedes Schnittstellenteil (9) im Bereich zumindest einer Durchgangsöffnung (3") für die Stutzen (4, 4') dicht am Körper (3) des Verteilers angebracht ist, vorzugsweise durch Verschweißen, Verkleben oder Verschrauben unter Zwischenlage einer Dichtung.

6. Ansaugverteiler nach einem der Ansprüche 1 bis 5, **dadurch gekennzeichnet, dass** die Flüssigkeitsabdichtung (5) näher am freien Ende (4") eines Stutzens (4, 4') als die entsprechende, diesem Stutzen (4, 4') zugeordnete Luftabdichtung (6) angeordnet ist, wobei die Abdichtungsmittel (5', 6') unter elastischer Kompression in den jeweiligen ringförmigen Räumen (11, 12) montiert sind, die jeweils durch komplementäres Zusammenwirken eines Stutzens (4, 4'), der gegebenenfalls mit Montagestellen (17, 17') in Form von umlaufenden Rillen oder Nuten versehen ist, mit jeweils einer Endmuffe (7") einer Zirkulationsleitung (7, 7') bzw. einer Schürze (18) eines Verlängerungsendstücks (8, 8') einerseits und einem Kragen (16), der Teil des Verteilerkörpers (3) oder eines an diesem Körper (3) angebrachten Schnittstellenteils (9) ist, im Bereich der Durchgangsöffnung (3'') des betreffenden Stutzens (4, 4') durch die Wand (3') des Verteilerkörpers (3) andererseits ausgebildet sind.

7. Ansaugverteiler, nach einem der Ansprüche 1 bis 6, **dadurch gekennzeichnet, dass** der Körper (3) des Verteilers, die Zirkulationsleitungen (7, 7'), das Schnittstellenteil (9) und die Verlängerungsendstücke (8, 8') aus thermoplastischen, gegebenenfalls gefüllten und/oder verstärkten Materialien ausgeführt sind, wobei der Körper (3) des Verteilers vorteilhafter Weise durch Montage von zumindest zwei Bauteilen (23, 23') gebildet ist.

8. Kraftfahrzeug mit einem Verbrennungsmotor, umfassend einen Luftansaugkreislauf und zumindest einen Kühlkreislauf, wobei das Fahrzeug **dadurch gekennzeichnet ist, dass** der Luftansaugkreislauf einen Verteiler (1) nach einem der Ansprüche 1 bis 7 umfasst, wobei der integrierte Wärmetauscher (2) Teil des Kühlkreislaufs ist.

## Claims

1. Air intake manifold (1) comprising a heat exchanger (2) that is entirely integrated within its body (3), said heat exchanger (2) being arranged entirely in the hollow body (3) of said manifold (1) and comprising at least two pipes (4 and 4') for the inflow and outflow of heat exchange liquid, said pipes (4, 4') extending through the wall (3') of the body (3) of the manifold (1), each of the pipes having a seal with respect to liquid (5) and a seal with respect to air (6), these being distinct and set apart from one another along the longitudinal axis (AL) of the pipe (4, 4') in question,
in which manifold (1) a means (5') establishing the seal with respect to liquid (5) is, for each of the pipes (4 and 4'), arranged between the pipe (4, 4') and a circulation duct (7, 7') that is attached and connected directly to the free end (4") of this pipe (4, 4'), in which a means (6') establishing the seal with respect to air (6) is positioned between the pipe (4, 4') and the body (3) of the manifold (1), the seal with respect to liquid (5) being located, relative to the internal volume of the body (3) of the manifold (1), beyond the seal with respect to air (6), that is to say further out than the latter, and in which a leakage path (10) associated with the seal with respect to liquid (5) and configured to evacuate leaks of liquid to the outside environment, is provided between this seal with respect to liquid (5) and the seal with respect to air (6),
in which manifold (1) each pipe (4, 4') forms by cooperation with, on one hand, the associated circulation duct (7, 7') and, on the other hand, the body (3) of the manifold, in each case a recess (11, 12) for receiving while compressing the sealing means (5', 6') in question, the leakage path (10) comprising, at its upstream end, a drainage opening (13) for the recess (11) receiving the means (5') for sealing with respect to liquid, said opening (13) discharging to the outside environment via the leakage path (10) and being located beyond the sealed barrier provided by the means (5') for sealing with respect to liquid, on the side outside of said barrier,
manifold (1) **characterized in that** a through-opening (3") for the at least two pipes (4, 4') at the body (3) of the manifold is provided with an L-section collar (16), defining in head-to-tail cooperation with a shoulder (19) of the pipe (4, 4'),
**in that** the annular recess (12) for receiving the seal with respect to air (6') and the end sleeve (7") of the circulation duct (7, 7") extends above the edge of the free end (4") of the pipe (4, 4') and at least partially above the collar (16) of the through-opening (3") of the body (3) of the manifold, delimiting with said pipe (7, 7") and said collar (16) the recess (11) for receiving the seal with respect to liquid (5') and
**in that** the two circulation ducts (7 and 7') with their respective end sleeves (7") form a single, integral part, this part (7, 7', 7") being locked in place on the body (3) of the manifold (1), for example by means of a screw-fitting fastener (15') that engages in said body (3).

2. Air intake manifold (1) comprising a heat exchanger (2) that is entirely integrated within its body (3), said heat exchanger (2) being arranged entirely in the hollow body (3) of said manifold (1) and comprising at least two pipes (4 and 4') for the inflow and outflow of heat exchange liquid, said pipes (4, 4') extending through the wall (3') of the body (3) of the manifold (1), each of the pipes having a seal with respect to liquid (5) and a seal with respect to air (6), these being distinct and set apart from one another along the longitudinal axis (AL) of the pipe (4, 4') in question,
in which manifold (1) a means (5') establishing the seal with respect to liquid (5) is, for each of the pipes (4 and 4'), arranged between the pipe (4, 4') and an extension end piece (8, 8') that is attached and connected to the free end (4") of this pipe (4, 4'), in which a means (6') establishing the seal with respect to air (6) is positioned between the pipe (4, 4') and an interface part (9) joined in sealing fashion to the body (3) of the manifold (1), the seal with respect to liquid (5) being located, relative to the internal volume of the body (3) of the manifold (1), beyond the seal with respect to air (6), that is to say further out than the latter, and in which a leakage path (10) associated with the seal with respect to liquid (5) and configured to evacuate leaks of liquid to the outside environment, is provided between this seal with respect to liquid (5) and the seal with respect to air (6),
in which manifold (1) each pipe (4, 4') forms by cooperation with, on one hand, the associated extension end piece (8, 8') and, on the other hand, the interface part (9), in each case a recess (11, 12) for receiving while compressing the sealing means (5', 6') in question, the leakage path (10) comprising, at its upstream end, a drainage opening (13) for the recess (11) receiving the means (5') for sealing with respect to liquid, said opening (13) discharging to the outside environment via the leakage path (10) and being located beyond the sealed barrier provided by the means (5') for sealing with respect to liquid, on the side outside of said barrier,
manifold (1) **characterized in that** a common through-opening (3") for the at least two pipes (4 and 4') through the wall (3') of the body (3) of the manifold is provided with a mechanical and fluidic interface part (9) comprising a plate-like main body (9') secured in sealing fashion to the body (3) of the manifold, preferably continuously along the edge (3"') of the common through-opening (3"'),
**in that** the main body (9') of the part (9) has formed on it, integrally, on one hand, mounting and fastening sites (15) for the two extension end pieces (8 and 8') and, on the other hand, cylindrical internal collars (16) that are fitted onto the pipes (4, 4') and extend at least partially into the common through-opening (3"), these collars (16) delimiting, with the outer faces of the pipes (4, 4'), recesses for receiving the means for sealing with respect to air (6'), and
**in that** each extension end piece (8, 8') comprises a plate-like main body (20) comprising, integrally, on one hand, a cylindrical skirt (18) that is able and designed to be fitted onto the free end of a pipe (4, 4'), delimiting with the outer face of the latter a recess (11) for receiving a means for sealing with respect to liquid (5'), and, on the other hand, a portion of a connection duct (20') which extends in the opposite direction from the collar (16) and whose internal passage has a section identical to that of the corresponding pipe (4, 4') and is aligned axially with the internal passage of the latter, said main body (20) being furthermore provided with sites (21) for receiving screw-fitting fasteners (22), these being coincident with those of the interface part (9).

3. Manifold according to Claim 1 or 2, **characterized in that** the seal with respect to liquid (5), which is offset to the outside relative to the seal with respect to air (6), is located outside the body (3) of the manifold (1) and above the seal with respect to air (6), when the manifold (1) is in its normal position of use, and **in that** the leakage path (10) extends, from the seal with respect to liquid (5), away from the pipe (4, 4') in question, and downwards overall.

4. Intake manifold according to Claim 1 or 2, **characterized in that** the receiving recesses (11, 12) are annular, preferably square or rectangular in cross section, and **in that** the sealing means (5', 6') consist of O-rings, the drainage openings (13) advantageously consist of passages of the slot or gap type, opening onto a flow surface (14) or into a flow duct (14') arranged outside the body (3) of the manifold.

5. Intake manifold according to Claim 2 or any one of Claims 3 and 4 insofar as they relate to Claim 2, **characterized in that** the or each interface part (9) comprises, on one hand, at least one mounting and fastening site (15) for at least one extension end piece (8, 8') or circulation duct (7, 7') and, on the other hand, at least one wall portion (16) that constitutes a collar and externally faces the pipe (4, 4') in question in order to establish a receiving recess (12) for a means for sealing with respect to air (6'), said or each interface part (9) being attached in sealing fashion to the body (3) of the manifold, at at least one through-opening (3") for the pipes (4, 4'), preferably by welding, adhesive bonding or screw-fitting with interposition of a seal.

6. Intake manifold according to any one of Claims 1 to 5, **characterized in that** the seal with respect to liquid (5) is arranged closer to the free end (4") of a pipe (4, 4') than the corresponding seal with respect to air (6) associated with that pipe (4, 4'), the sealing means (5', 6') being mounted with elastic compression in respective annular receiving recesses (11, 12), each being formed by complementary cooperation between a pipe (4, 4'), possibly provided with mounting sites (17, 17') in the form of peripheral grooves or channels, and respectively, on one hand, an end sleeve (7") of a circulation duct (7, 7') or a skirt (18) of an extension end piece (8, 8') and, on the other hand, a collar (16) that forms part of the body (3) of the manifold or of an interface part (9) attached to this body (3), at the through-opening (3") of the pipe (4, 4') in question through the wall (3') of the body (3) of the manifold.

7. Intake manifold according to any one of Claims 1 to 6, **characterized in that** the body (3) of the manifold, the circulation ducts (7, 7'), the interface part (9) and the extension end pieces (8, 8') are made of thermoplastic materials, possibly having a filler material and/or being reinforced, the body (3) of the manifold advantageously consisting of at least two constituent parts (23, 23') that are joined together.

8. Motor vehicle having an internal combustion engine, comprising an air intake circuit and at least one cooling circuit, this vehicle being **characterized in that** the air intake circuit comprises a manifold (1) according to any one of Claims 1 to 7, the integrated heat exchanger (2) forming part of the cooling circuit.
